# EUROPEAN PATENT SPECIFICATION

(11) **EP 3 172 644 B1**
(45) Date of publication and mention of the grant of the patent: **23.10.2019**
(21) Application number: 15747326.5
(22) Date of filing: 24.07.2015
(51) Int. Cl.: G06F 3/01, G06F 3/14, G02B 27/00, G02B 27/01, G06T 19/00, G09G 3/00

(54) **MULTI-USER GAZE PROJECTION USING HEAD MOUNTED DISPLAY DEVICES**
MEHRBENUTZER-BLICKPROJEKTION MIT KOPFMONTIERTEN ANZEIGEVORRICHTUNGEN
PROJECTION DE REGARD MULTIUTILISATEUR À L'AIDE DE DISPOSITIFS DE VISIOCASQUE

(30) Priority: 25.07.2014 US 201462029351 P; 27.05.2015 US 201514723065
(43) Date of publication of application: 31.05.2017
(73) Proprietor: Microsoft Technology Licensing, LLC, Redmond, WA 98052-6399 (US)
(72) Inventor: SALTER, Thomas, Redmond, Washington 98052-6399 (US); SUGDEN, Benjamin, Redmond, Washington 98052-6399 (US); MASSEY, Laura, Redmond, Washington 98052-6399 (US); KEANE, Brian, Redmond, Washington 98052-6399 (US)
(74) Representative: CMS Cameron McKenna Nabarro Olswang LLP
(86) International application number: PCT/US2015/041861
(87) International publication number: WO 2016/014871

(56) References cited:
- WO-A1-2009/128781
- WO-A1-2013/085193
- US-A1- 2013 141 419

## Description

### BACKGROUND

Virtual reality computing devices, such as head mounted display (HMD) systems and handheld mobile devices (e.g. smart phones, tablet computers, etc.), may be configured to display virtual and/or mixed reality environments to a user in the field of view of the user and/or a field of view of a camera of the device. Similarly, a mobile device may display such information using a camera viewfinder window.

This Background is provided to introduce a brief context for the Summary and Detailed Description that follow. This Background is not intended to be used as an aid in determining the scope of the claimed subject matter nor be viewed as limiting the claimed subject matter to implementations that solve any or all of the disadvantages or problems presented above.
US 20130141419 A1 discloses a head-mounted display device configured to visually augment an observed physical space to a user. The head-mounted display device includes a see-through display and is configured to receive augmented display information, such as a virtual object with occlusion relative to a real world object from a perspective of the see-through display.
WO 2013/085193 A1 discloses gaze tracking for the purpose of monitoring a user's comprehension of information displayed on a computer screen.
WO 2009/128781 A1 discloses document sharing to allow service personnel to film and share their immediate environment and share it with support at base. Both the local user on location and an advisor at base can control their own pointers to help explain and ask questions.
A book, titled "Eye Tracking Methodology Theory and Practice", written by Duchowski, Andrew, discloses a gaze ray and a point of intersection in 3D dimensions.

### SUMMARY

An HMD device operating in a real world physical environment is configured with a sensor package that enables determination of an intersection of a projection of the device user's gaze with a location in a mixed or virtual reality environment. When a projected gaze ray is visibly rendered on other HMD devices (where all the devices are operatively coupled), users of those devices can see what the user is looking at in the environment. In multi-user settings, each HMD device user can see each other's projected gaze rays which can facilitate collaboration in a commonly-shared and experienced mixed or virtual reality environment. The gaze projection can be used much like a finger to point at an object, or to indicate a location on a surface with precision and accuracy.

In an illustrative example, each HMD device supports an application that is configured to render avatars that represent the position and orientation of other users of the commonly shared mixed or virtual reality environment. A gaze ray originates at the center of the avatar's face and projects into the environment and terminates when it hits a real or virtual surface. Marker and effects such as lighting and animation may be utilized to highlight the point of intersection between the projected gaze ray and the environment. The appearance of the gaze rays may also be controlled, for example, to enable them to be uniquely associated with users by color, shape, animation, or by other characteristics. User controls can also be supported so that, for example, a user can switch the gaze ray visibility on and off and/or control other aspects of gaze ray generation and/or rendering.

HMD device state and other information may be shared among HMD devices which can be physically remote from each other. For example, gaze ray origin and intercept coordinates can be transmitted from a ray-originating HMD device to another (non-originating) HMD device. The non-originating HMD device can place an avatar at the origin to represent the originating user and visibly render the gaze ray between the origin and intercept to enable the non-originating user to see where the originating user is looking.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. Furthermore, the claimed subject matter is not limited to implementations that solve any or all disadvantages noted in any part of this disclosure. It may be appreciated that the above-described subject matter may be implemented as a computer-controlled apparatus, a computer process, a computing system, or as an article of manufacture such as one or more computer-readable storage media. These and various other features may be apparent from a reading of the following Detailed Description and a review of the associated drawings.

### BRIEF DESCRIPTION OF THE DRAWINGS

FIG 1 shows an illustrative virtual reality environment, a portion of which is rendered within the field of view of a user of an HMD device;
FIG 2 shows an illustrative real world physical environment in which users of HMD devices are located;
FIG 3 shows users of HMD devices that are located in different physical environments;
FIG 4 shows an illustrative visible gaze projection from an avatar of an HMD device user in a virtual world;
FIG 5 shows an illustrative gaze projection that intersects with an object in the virtual world;
FIG 6 shows an illustrative effect that highlights the point of intersection of the gaze projection with the virtual world;
FIG 7 shows an illustrative marker that highlights the point of intersection of the gaze projection with the virtual world;
FIG 8 depicts depth data associated with a real world environment being captured by an HMD device;
FIG 9 shows an illustrative user interface supported by an HMD device and illustrative data provided by an HMD sensor package;
FIG 10 shows a block diagram of an illustrative surface reconstruction pipeline;
FIGs 11, 12, and 13 are flowcharts of illustrative methods that may be performed using an HMD device;
FIG 14 is a pictorial view of an illustrative example of an HMD device;
FIG 15 shows a functional block diagram of an illustrative example of an HMD device;
FIGs 16 and 17 are pictorial front views of an illustrative sealed visor that may be used as a component of an HMD device;
FIG 18 shows a view of the sealed visor when partially disassembled;
FIG 19 shows a phantom line front view of the sealed visor;
FIG 20 shows a pictorial back view of the sealed visor; and
FIG 21 shows an exemplary computing system.

Like reference numerals indicate like elements in the drawings. Elements are not drawn to scale unless otherwise indicated.

### DETAILED DESCRIPTION

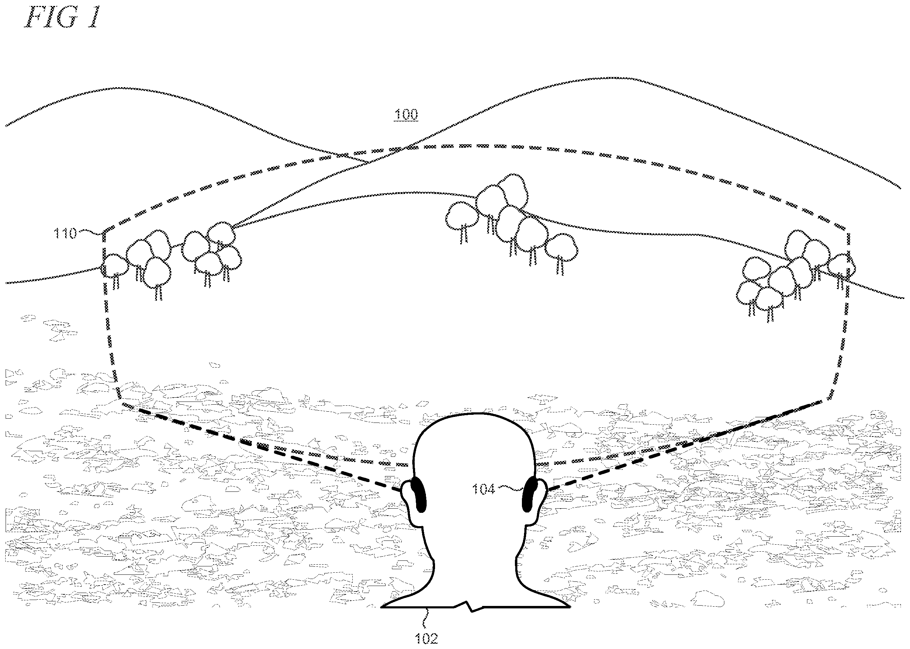

Users can typically explore, navigate, and move within a virtual reality environment rendered by an HMD device by moving (e.g., through some form of locomotion) within a corresponding real world physical environment. In an illustrative example, as shown in FIG 1, a user 102 can employ an HMD device 104 to experience a virtual reality environment 100 that is rendered visually in three dimensions (3D) and may include audio and/or tactile/haptic sensations in some implementations. In this particular non-limiting example, an application executing on the HMD device 104 supports a virtual reality environment 100 that includes an outdoor landscape that includes rock-strewn terrain. For example, the application could be part of a surveying tool where geologists can explore a virtual landscape representing a real or imaginary place.

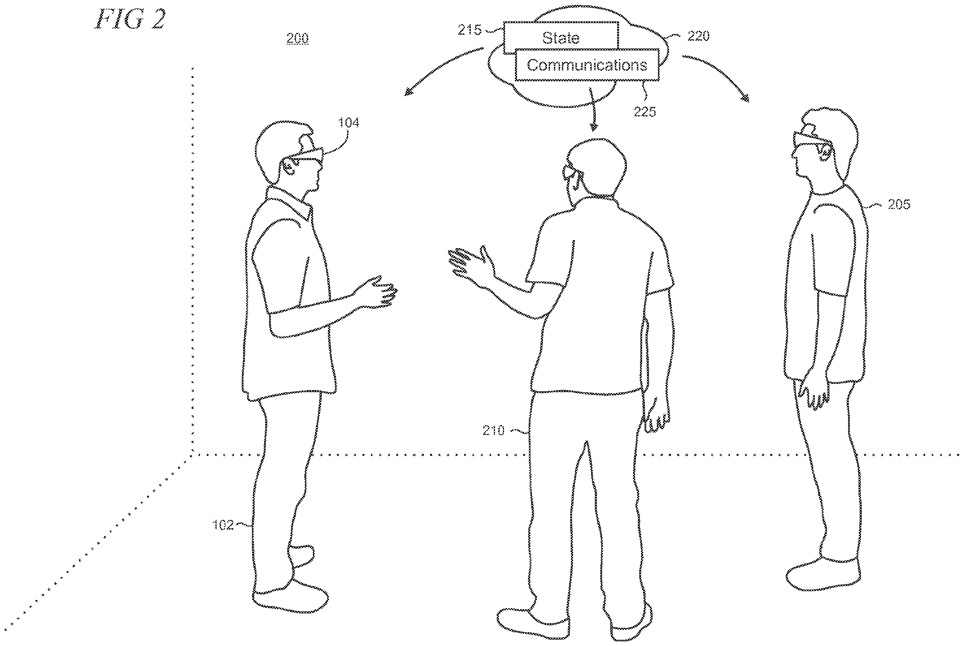

As the user changes the position or orientation of his head and/or moves within the physical real world environment 200 shown in FIG 2, his view of the virtual reality environment 100 can change. The field of view (represented by the dashed area 110 in FIG 1) can be sized and shaped and other characteristics of the device can be controlled to make the HMD device experience visually immersive to provide the user with a strong sense of presence in the virtual world. While a virtual reality environment is shown and described herein, the present gaze projection can also be applied to mixed reality environments and scenarios in which both real world and virtual world elements are supported.

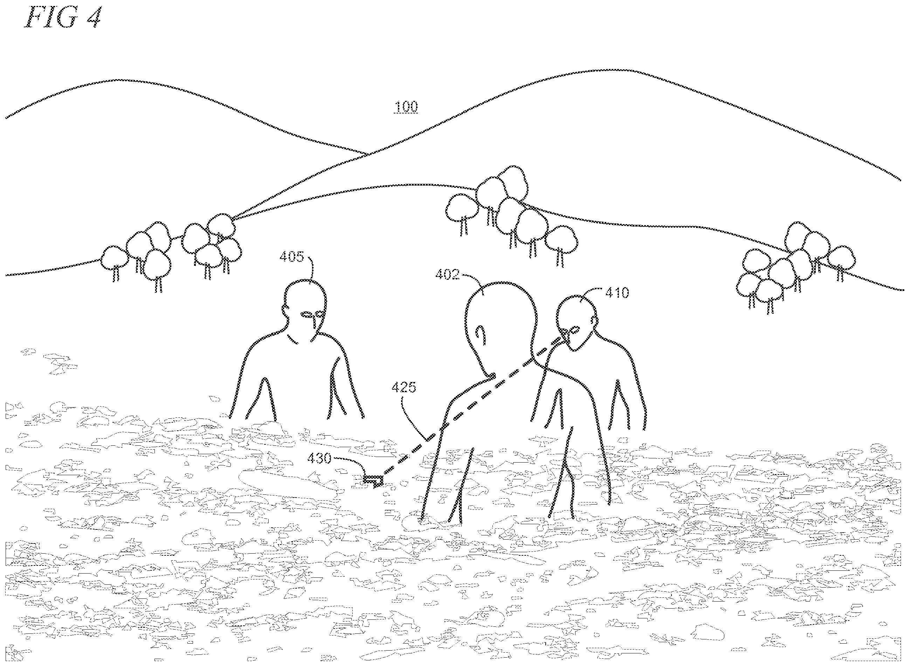

As shown in FIG 2, users 102, 205, and 210 are each equipped with their own HMD device and are located in the physical environment 200. In typical implementations of gaze projection two or more users will interact in a commonly shared and experienced virtual reality environment. State information 215 is shared among the HMD devices, typically over a network 220 such as a peer-to-peer short range wireless network, local-area network, or other suitable network infrastructure. Such state information can typically convey, for example, the operating state of an HMD device and/or changes in state that occur over time. The particular state parameters that are tracked and shared among the HMD devices can vary by implementation and may include and/or represent, for example, one or more of user location in the physical environment, head height above the ground, head position and orientation (i.e., pose), user input and other events, user and/or device ID, device status, device messages, application status, application messages, system status, system messages, data, errors, commands, requests, and the like. State information 215 may also include gaze origin and intercept coordinates, as described below in the text accompanying FIG 4.

State parameters may be passed from one HMD device and be used by other HMD devices to enable avatars to be dynamically rendered in some implementations within the virtual reality environment in a manner that enables the users to interact with each other in the virtual world using sight and sound in real time. For example, a virtual reality application running (in whole or part) on the HMD devices can support the commonly shared and experienced virtual world to the users to provide any of a variety of group user experiences.

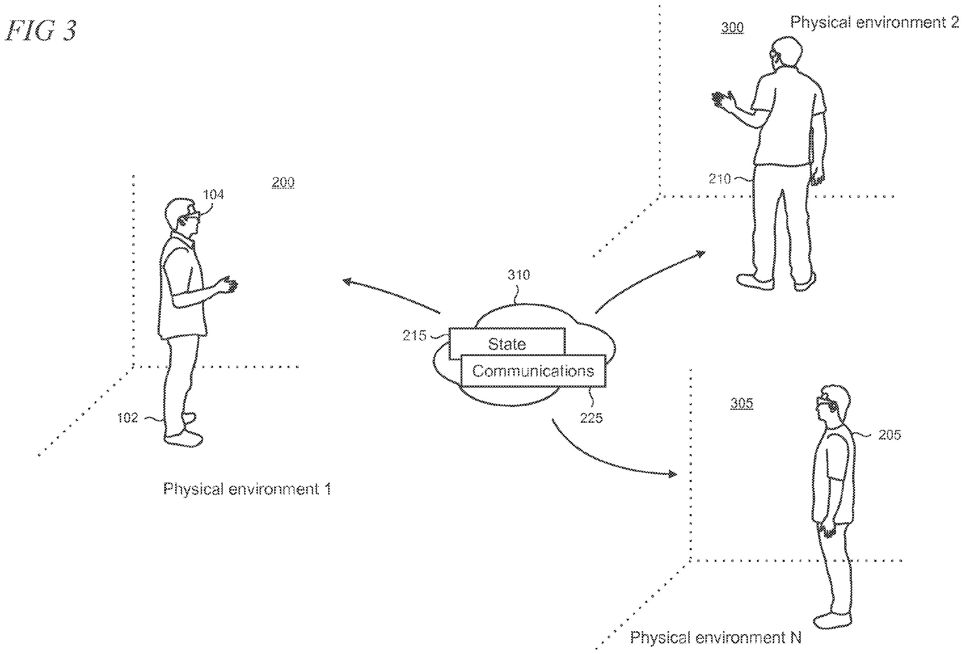

Communications 225 including voice, messaging, data, and other formats/types, for example, may also be supported among the devices. It is emphasized that the HMD device users do not necessarily need to be located in the same physical environment. As depicted in FIG 3, users can be located in multiple different physical environments 1, 2 ... N (illustratively shown as physical environment 200, physical environment 300, and physical environment 305). A network 310 such as a LAN or wide-area network (WAN) may be utilized, for example, to support connectivity between the physically separated users and HMD devices.

In a given virtual reality application, it is common to represent real world users with avatars in the virtual reality environment that is rendered on the display of each of the HMD devices. In this particular example, an avatar is rendered for each user 102, 205, and 210 in the virtual reality environment that is commonly accessed and shared by the users. Rendering of the avatar is typically performed in view of the user's corresponding position and movements in the physical environment which are tracked by their respective HMD devices, as described in more detail below. A given user can thereby typically control his own avatar in the virtual reality environment through body location and movement and/or other user inputs while simultaneously seeing the dynamically rendered avatars and projected gaze rays of other users of the shared environment on his HMD device.

FIG 4 shows an illustrative screen capture (i.e., snapshot) of avatars 402, 405, and 410 in the virtual reality environment 100 representing respective users 102, 205, and 210 as would be rendered on an HMD device display of an observer or an imaginary fourth user who is sharing the common environment 100 (note that the field of view of such observer is not depicted in FIG 4 for the sake of clarity). The avatars in this example can be rendered as semi-transparent upper body figures, as shown, or be rendered using other types of graphic representations as may be needed for a particular application using any suitable form. Avatars can be rendered with some distinguishing and/or unique characteristics in typical implementations to enable their corresponding users to be readily identified by the other users.

A gaze ray 425 is projected from a view position of avatar 410 (representing user 205 in FIG 2). The view position typically originates between the eyes of the user and the corresponding avatar and the gaze ray 425 points in the forward direction. The gaze ray 425 is cast into the virtual reality environment 100 and is visibly rendered to the other users in some form to show the ray's path from the origin at the view position of the avatar 410 (representing the user who is originating the gaze ray) to the ray's closest point of intersection with the virtual reality environment 100. Such visibly rendered gaze ray can indicate to the other users 102 and 205 (i.e., the non-originating users) where the user 205 is looking. In some implementations a cursor (not shown), or other suitable indicator, may be displayed on the HMD device of the originating user 210 at the point of intersection between the gaze ray and the virtual world. The cursor may be utilized to provide feedback to the originating user to confirm the point of intersection. The cursor can also be arranged to be visible to the other users in some cases.

In this example, the gaze ray 425 intersects with an object 430 (e.g., a particular rock in the rock-strewn field). The particular rendering form of the gaze ray and/or cursor may utilize different colors, shapes, patterns, animations, special effects, and the like according to the needs of a given implementation and may vary from what is shown and described here. The originating user may be given options to control the appearance or behaviors of the gaze ray and/or cursor through user input such as turning its visibility to other users on and off, changing its color or animation, and the like. The user input can vary by implementation and may include, for example, a sensed gesture, a voice command or language input, a manipulation of a physical or virtual control that is supported by the HMD device, or the like. In some implementations, the HMD device and/or the virtual reality application may employ different colors, shapes, patterns, or other devices and/or indicators for the visibly-rendered projected gaze ray, for example, to make the rendered appearance of the gaze ray unique for a particular user. A blue colored gaze ray could thus be associated with one user while a red one is utilized for another user.

The rendered gaze ray 425 thus indicates to the users 102 and 205 (FIG 2) that the avatar 410 (and hence user 210) is looking at the object 430 at the particular instant of time captured by FIG 4. The capabilities and features provided by the present visible gaze rays can be expected to enhance collaboration among users in multi-user settings with commonly-shared virtual worlds. The visible gaze ray can work like a finger to point to an object of interest and typically provides a pointing capability that is precise and accurate while being easy to control. In addition, a gaze ray may be followed back to an avatar to identify who is looking at the object. Accordingly, for example, the state information shared among the HMD devices described above may include the origin of a gaze ray and its point of intersection (i.e., the intercept) with the virtual reality environment. In some implementations, the HMD device receiving the origin and intercept coordinates may place an avatar representing the originating user at the origin and then visibly render the gaze ray from the origin (which may be located at the avatar's face between the eyes, for example) to the intercept.

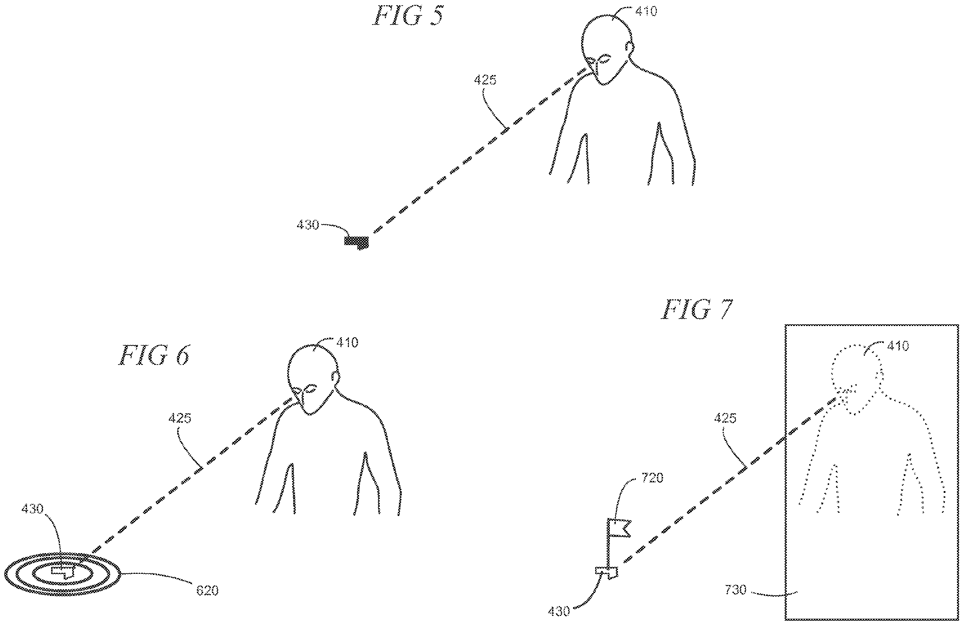

The termination of the gaze ray 425 at the point of intersection with the gazed-upon object 430 may be sufficient by itself in some cases to show that the avatar 410 (and user 210) is looking at the object 430. In other cases, the object 430 can be highlighted or otherwise explicitly indicated within the virtual reality environment. For example, the object can be rendered using colors, contrasting light compared with the surroundings, or the like. Thus, a gazed-upon object 530 may be darkened in a light-infused scene, as shown in FIG 5 or lightened in a darker scene. Other techniques to indicate a gazed-upon object in the virtual environment can include graphics such as the concentric circles 620 shown in FIG 6. Animation may be applied, for example, so that the concentric circles continuously collapse inward and/or expand outward to provide additional highlighting and emphasis to the object or to indicate some particular object state. FIG 7 shows a marker 720 such as a flag to highlight a gazed-upon object. Animation may be applied, for example, to make the flag flutter to provide additional highlighting and emphasis to the object or to indicate some particular object state. FIG 7 also shows how the avatar 410 may be obscured from view, for example by being behind a wall 730 or other object, but the projected gaze ray 425 is still visible allowing users to see where the avatar 410 is looking even when the avatar is not visible itself.

In some implementations, the gaze ray may be projected from a user's view position which is typically determined by tracking the position and orientation of the user's head (as described in more detail below). In alternative implementations, the HMD device may also be configured to project the gaze ray according to the position of the user's eyes along the direction of the user's gaze. Eye position may be detected, for example, using inward facing sensors that may be incorporated into the HMD device 104. Such eye position detection is referred to as gaze tracking and is described in more detail below. Thus, the user may employ combinations of head and eye movement to alter the trajectory of a gaze ray to control the point of intersection between the projected gaze ray and the virtual reality environment. The HMD device 104 may be configured to enable the user to selectively engage and disengage gaze tracking according to user input. For example, there may be scenarios in which gaze ray projection according to head pose provides a more optimized user experience compared with projection that relies on gaze tracking and vice versa.

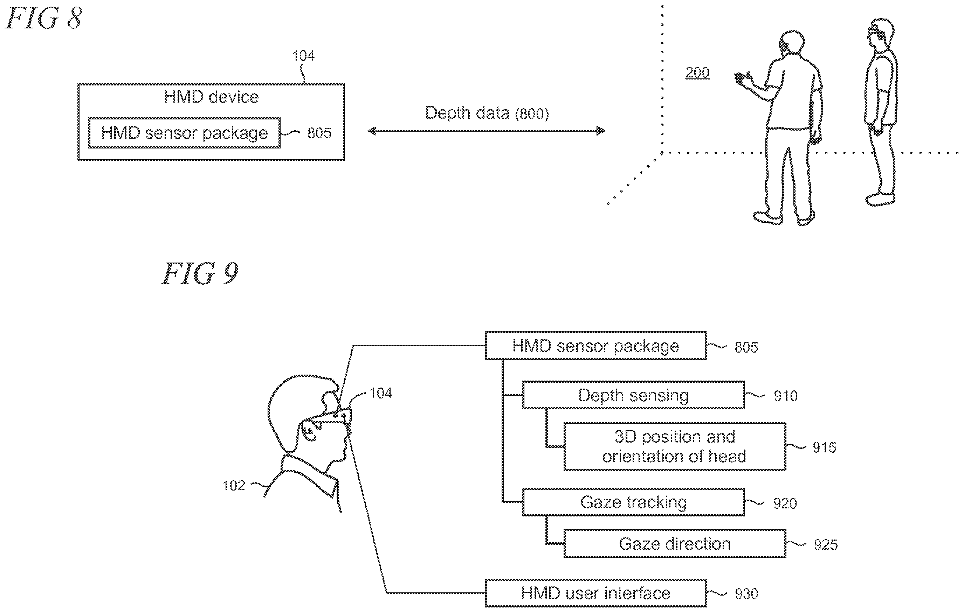

The HMD device 104 is configured to obtain depth data 800, as shown in FIG 8, by using an integrated sensor package 805 to sense the user's position within a given physical environment (e.g., environments 200 and/or 300 shown in FIGs 2 and 3 and described in the accompanying text. The sensor package, as described in more detail below, can include a depth sensor or depth-sensing camera system. In alternative implementations, depth data can be derived using suitable stereoscopic image analysis techniques.

As shown in FIG 9, the sensor package 805 can support various functionalities including depth sensing 910. Depth sensing may be utilized, for example, for head tracking to determine the 3D (three-dimensional) position and orientation 915 of the user's head within the physical real world environment 200 including head pose so that a view position of the virtual world can be determined. The sensor package can also support gaze tracking 920 to ascertain a direction of the user's gaze 925 which may be used along with the head position and orientation data. The HMD device 104 may further be configured to expose a user interface (UI) 930 that can display system messages, prompts, and the like as well as expose controls that the user may manipulate. For example, such controls may be configured to enable the user to control how the visible ray and/or cursor appear to other users and/or behave, as described above. The controls can be virtual or physical in some cases. The UI 930 may also be configured to operate with sensed gestures and voice using, for example, voice commands or natural language.

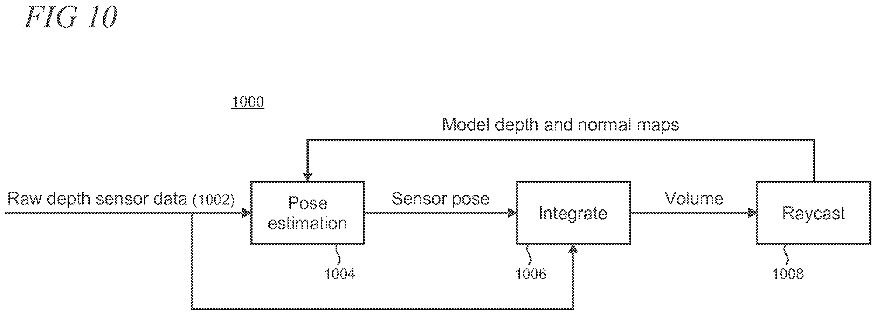

FIG 10 shows an illustrative surface reconstruction data pipeline 1000 for obtaining surface reconstruction data for the real world environment 200. It is emphasized that the disclosed technique is illustrative and that other techniques and methodologies may be utilized depending on the requirements of a particular implementation. Raw depth sensor data 1002 is input into a 3D (three-dimensional) pose estimate of the sensor (block 1004). Sensor pose tracking can be achieved, for example, using ICP (iterative closest point) alignment between the predicted surface and current sensor measurement. Each depth measurement of the sensor can be integrated (block 1006) into a volumetric representation using, for example, surfaces encoded as a signed distance field (SDF). Using a loop, the SDF is raycast (block 1008) into the estimated frame to provide a dense surface prediction to which the depth map is aligned. Thus, when the user 102 looks around the virtual world, depth data associated with the real world environment 200 can be collected and analyzed to determine the user's head position and orientation.

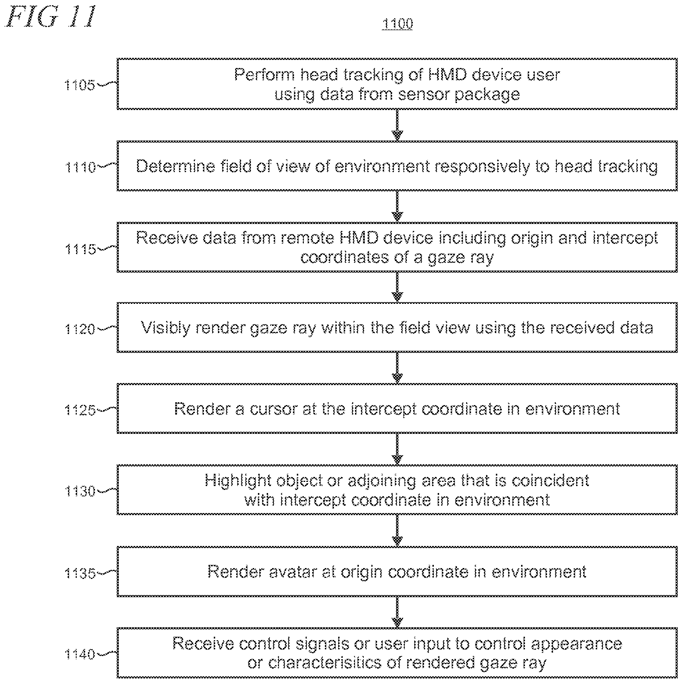

FIGs 11, 12, and 13 are flowcharts of illustrative methods. Unless specifically stated, the methods or steps shown in the flowcharts and described in the accompanying text are not constrained to a particular order or sequence. In addition, some of the methods or steps thereof can occur or be performed concurrently and not all the methods or steps have to be performed in a given implementation depending on the requirements of such implementation and some methods or steps may be optionally utilized.

Method 1100 in FIG 11 may be performed by instructions stored on an HMD device operating in a real world environment and having a display that renders a virtual reality environment. In step 1105, head tracking of an HMD device user is dynamically performed using data from a sensor package onboard the HMD device. The head tracking may be performed, for example, on a frame-by-frame or other suitable basis, as the user moves within the real world environment. In step 1110, the user's current field of view of the mixed or virtual reality environment is determined responsively to the head tracking.

In step 1115, data is received from a remote HMD device. For example, the remote HMD device can be employed by a remote user who is participating with the local user in a commonly-shared virtual reality environment (e.g., environment 100 shown in FIG 1). The received data can include origin and intercept coordinates for a gaze ray originated by the remote user. In step 1120, the local HMD device may visibly render a gaze ray using the received coordinates within the current field of view of the mixed reality or virtual reality environment. A cursor may also be rendered at the intercept coordinate within the environment in step 1125. Highlighting of an object that is coincident with the intercept or an adjoining area can be performed in step 1130.

In step 1135, an avatar representing the remote user can be rendered on the local HMD device where a portion of the avatar, such as the face, will be positioned at the origin coordinate. In step 1140, control signals or user input can be received that can be utilized to control the appearance or various characteristics of the visibly rendered gaze ray on the local HMD device.

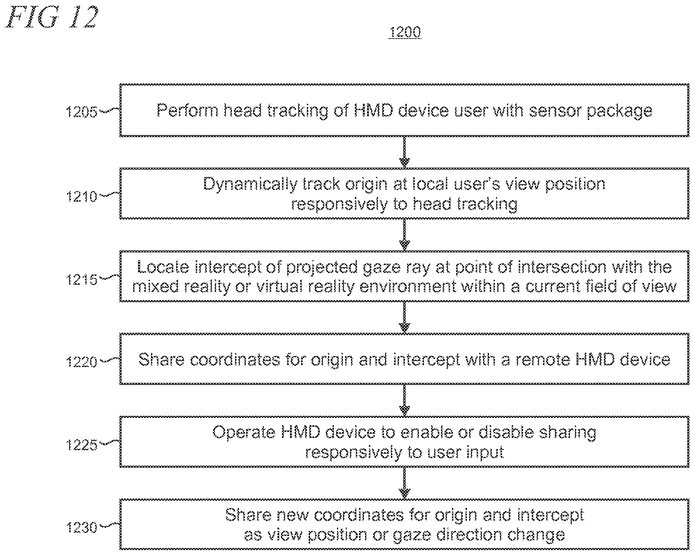

Method 1200 shown in FIG 12 may be performed by a local HMD device having one or more processors, a display for rendering a mixed reality or virtual reality environment using a variable field of view, a sensor package, and one or more memory devices that store computer-readable instructions such as software code that can be utilized to implement the method. In step 1205, tracking of the HMD device user's head is performed using the sensor package that is incorporated into the HMD device which may include a depth sensor or camera system. Various suitable depth sensing techniques may be utilized including that shown in the pipeline in FIG 10 in which multiple overlapping surfaces are integrated.

In step 1210, the head tracking is used to dynamically track an origin at the user's view position of the virtual reality environment. The sensor package may also be used to dynamically track the user's gaze direction, for example using inward facing sensors. In step 1215, an intercept of the projected gaze ray at a point of intersection with the mixed reality or virtual reality environment is located within the current field of view. In step 1220, coordinates for the origin and intercept are shared with a remote HMD device over a network or other communications link. The remote HMD device is configured to visibly render a gaze ray to the remote user using the shared coordinates. The gaze ray indicates to the remote user where the local user is looking in a commonly-shared environment.

In step 1225, the local HMD device may be operated responsively to user input to enable or disable the coordinate sharing. In step 1230, new coordinates for the origin and intercept may be shared as the view position of gaze direction of the local user changes.

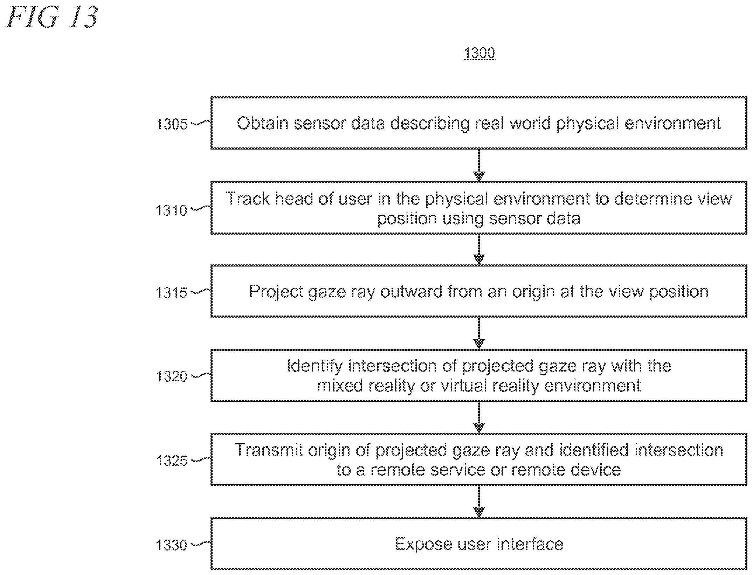

Method 1300 shown in FIG 13 may be performed by an HMD device that is operable by a user in a real world physical environment. In step 1305, sensor data describing portions of the physical environment is obtained. The sensor data can include, for example, depth data using a depth sensor that is integrated into the HMD device or be obtained from an external sensor or source. Depth-from-stereo imaging analyses may also be used to create depth data. In step 1310, the sensor data is used to track the head of the HMD device user within the physical environment in order to determine a view position of a mixed reality or virtual reality environment.

In step 1315, a gaze ray is projected outward from an origin at the view position. In some implementations, gaze detection may also be utilized so that the gaze ray is projected along a direction of the user's gaze. Gaze detection may also be implemented, for example, using inward facings sensors that are incorporated into the sensor package 805 (FIG 8).

In step 1320, an intersection is identified between the projected gaze ray and the mixed reality or virtual reality environment. In step 1325, the origin of the projected ray and the identified intersection are transmitted to remote service or remote device so that the data may be used by other HMD device to visibly render a gaze ray to indicate where the user is looking. In step 1330, the HMD device exposes a user interface and user input is received. The user interface can be configured according to the needs of a given implementation, and may include physical or virtual controls that may be manipulated by the user and may support voice and/or gestures in some cases.

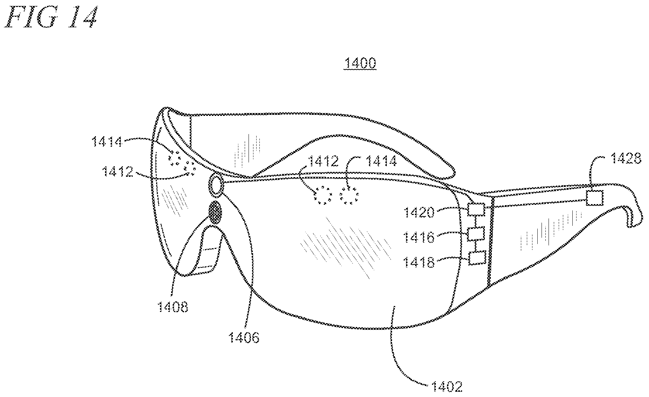

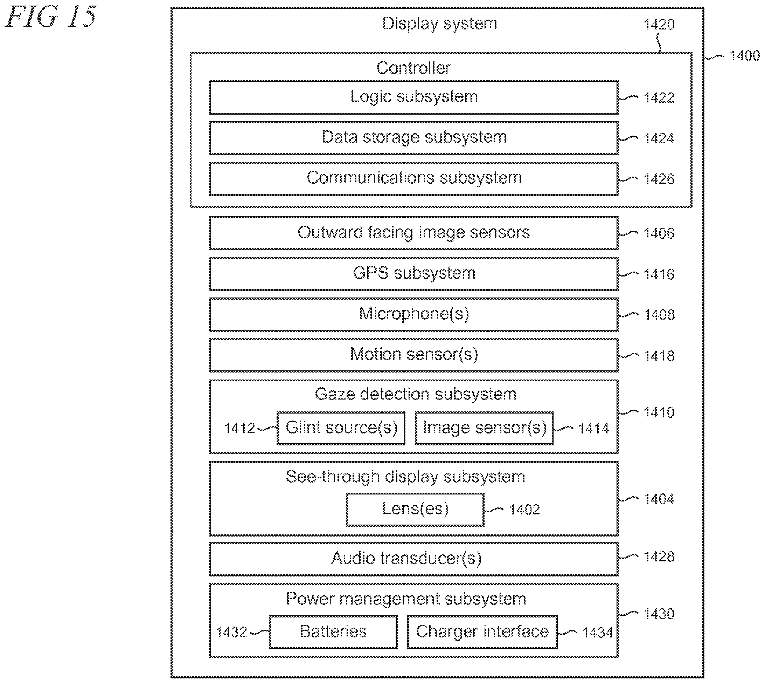

Turning now to various illustrative implementation details, a virtual reality or mixed reality display device according to the present arrangement may take any suitable form, including but not limited to near-eye devices such as the HMD device 104 and/or other portable/mobile devices. FIG 14 shows one particular illustrative example of a see-through, mixed reality display system 1400, and FIG 15 shows a functional block diagram of the system 1400. However, it is emphasized that while a see-through display may be used in some implementations, an opaque (i.e., non-see-through) display using a camera-based pass-through or outward facing sensor, for example, may be used in other implementations.

Display system 1400 comprises one or more lenses 1402 that form a part of a see-through display subsystem 1404, such that images may be displayed using lenses 1402 (e.g. using projection onto lenses 1402, one or more waveguide systems incorporated into the lenses 1402, and/or in any other suitable manner). Display system 1400 further comprises one or more outward-facing image sensors 1406 configured to acquire images of a background scene and/or physical environment being viewed by a user, and may include one or more microphones 1408 configured to detect sounds, such as voice commands from a user. Outward-facing image sensors 1406 may include one or more depth sensors and/or one or more two-dimensional image sensors. In alternative arrangements, as noted above, a virtual reality or mixed reality display system, instead of incorporating a see-through display subsystem, may display mixed reality images through a viewfinder mode for an outward-facing image sensor.

The display system 1400 may further include a gaze detection subsystem 1410 configured for detecting a direction of gaze of each eye of a user or a direction or location of focus, as described above. Gaze detection subsystem 1410 may be configured to determine gaze directions of each of a user's eyes in any suitable manner. For example, in the illustrative example shown, a gaze detection subsystem 1410 includes one or more glint sources 1412, such as infrared light sources, that are configured to cause a glint of light to reflect from each eyeball of a user, and one or more image sensors 1414, such as inward-facing sensors, that are configured to capture an image of each eyeball of the user. Changes in the glints from the user's eyeballs and/or a location of a user's pupil, as determined from image data gathered using the image sensor(s) 1414, may be used to determine a direction of gaze.

In addition, a location at which gaze lines projected from the user's eyes intersect the external display may be used to determine an object at which the user is gazing (e.g. a displayed virtual object and/or real background object). Gaze detection subsystem 1410 may have any suitable number and arrangement of light sources and image sensors. In some implementations, the gaze detection subsystem 1410 may be omitted.

The display system 1400 may also include additional sensors. For example, display system 1400 may comprise a global positioning system (GPS) subsystem 1416 to allow a location of the display system 1400 to be determined. This may help to identify real world objects, such as buildings, etc. that may be located in the user's adjoining physical environment.

The display system 1400 may further include one or more motion sensors 1418 (e.g., inertial, multi-axis gyroscopic or acceleration sensors) to detect movement and position/orientation/pose of a user's head when the user is wearing the system as part of an augmented reality HMD device. Motion data may be used, potentially along with eye-tracking glint data and outward-facing image data, for gaze detection, as well as for image stabilization to help correct for blur in images from the outward-facing image sensor(s) 1406. The use of motion data may allow changes in gaze location to be tracked even if image data from outward-facing image sensor(s) 1406 cannot be resolved.

In addition, motion sensors 1418, as well as microphone(s) 1408 and gaze detection subsystem 1410, also may be employed as user input devices, such that a user may interact with the display system 1400 via gestures of the eye, neck and/or head, as well as via verbal commands in some cases. It may be understood that sensors illustrated in FIGs 14 and 15 and described in the accompanying text are included for the purpose of example and are not intended to be limiting in any manner, as any other suitable sensors and/or combination of sensors may be utilized to meet the needs of a particular implementation of an augmented reality HMD device. For example, biometric sensors (e.g., for detecting heart and respiration rates, blood pressure, brain activity, body temperature, etc.) or environmental sensors (e.g., for detecting temperature, humidity, elevation, UV (ultraviolet) light levels, etc.) may be utilized in some implementations.

The display system 1400 can further include a controller 1420 having a logic subsystem 1422 and a data storage subsystem 1424 in communication with the sensors, gaze detection subsystem 1410, display subsystem 1404, and/or other components through a communications subsystem 1426. The communications subsystem 1426 can also facilitate the display system being operated in conjunction with remotely located resources, such as processing, storage, power, data, and services. That is, in some implementations, an HMD device can be operated as part of a system that can distribute resources and capabilities among different components and subsystems.

The storage subsystem 1424 may include instructions stored thereon that are executable by logic subsystem 1422, for example, to receive and interpret inputs from the sensors, to identify location and movements of a user, to identify real objects using surface reconstruction and other techniques, and dim/fade the display based on distance to objects so as to enable the objects to be seen by the user, among other tasks.

The display system 1400 is configured with one or more audio transducers 1428 (e.g., speakers, earphones, etc.) so that audio can be utilized as part of an augmented reality experience. A power management subsystem 1430 may include one or more batteries 1432 and/or protection circuit modules (PCMs) and an associated charger interface 1434 and/or remote power interface for supplying power to components in the display system 1400.

It may be appreciated that the depicted display devices 104 and 1400 are described for the purpose of example, and thus are not meant to be limiting. It is to be further understood that the display device may include additional and/or alternative sensors, cameras, microphones, input devices, output devices, etc. than those shown without departing from the scope of the present arrangement. Additionally, the physical configuration of a display device and its various sensors and subcomponents may take a variety of different forms without departing from the scope of the present arrangement.

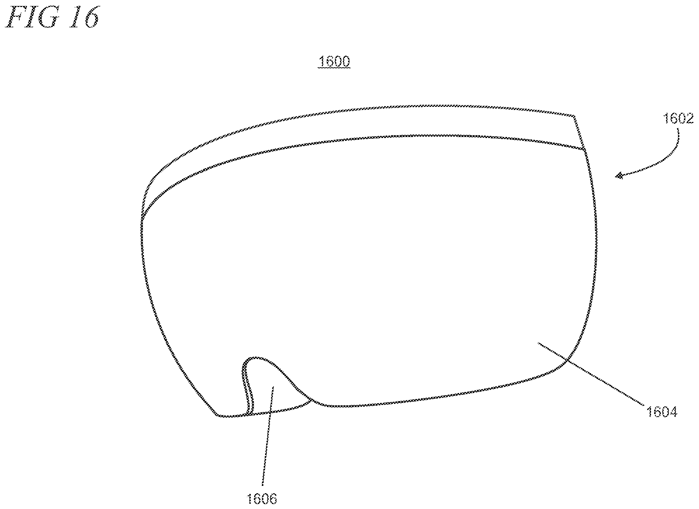

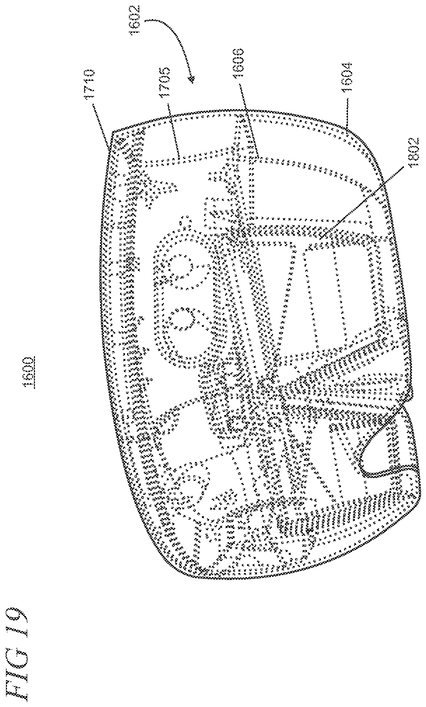

FIGs 16-20 show an illustrative alternative implementation for a virtual or mixed reality display system 1600 that may be used as a component of an HMD device. In this example, the system 1600 uses a see-through sealed visor 1602 that is configured to protect the internal optics assembly utilized for the see-through display subsystem. The visor 1602 is typically interfaced with other components of the HMD device (not shown) such as head mounting/retention systems and other subsystems including sensors, power management, controllers, etc., as illustratively described in conjunction with FIGs 14 and 15. Suitable interface elements (not shown) including snaps, bosses, screws and other fasteners, etc. may also be incorporated into the visor 1602.

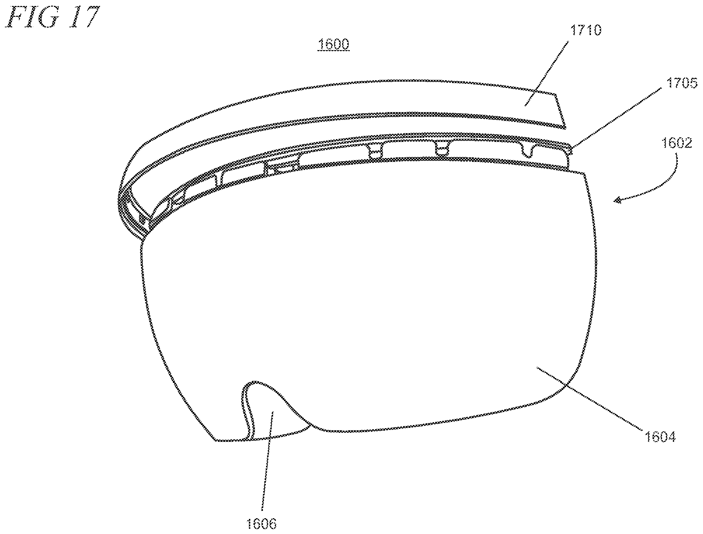

The visor includes see-through front and rear shields 1604 and 1606 respectively that can be molded using transparent materials to facilitate unobstructed vision to the optical displays and the surrounding real world environment. Treatments may be applied to the front and rear shields such as tinting, mirroring, anti-reflective, anti-fog, and other coatings, and various colors and finishes may also be utilized. The front and rear shields are affixed to a chassis 1705 as depicted in the partially exploded view in FIG 17 in which a shield cover 1710 is shown as disassembled from the visor 1602.

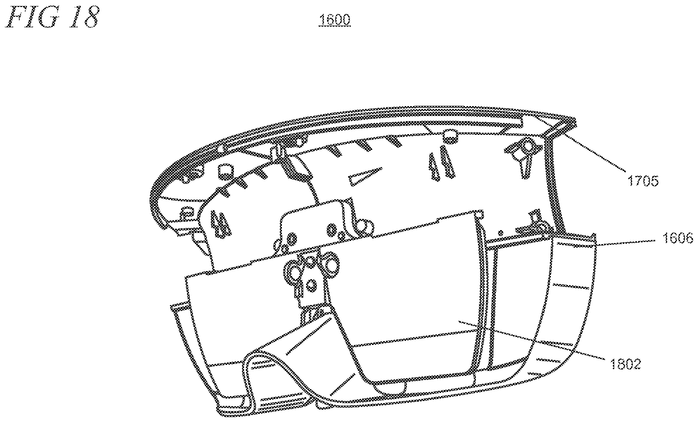

The sealed visor 1602 can physically protect sensitive internal components, including an optics display subassembly 1802 (shown in the disassembled view in FIG 18) when the HMD device is worn and used in operation and during normal handling for cleaning and the like. The visor 1602 can also protect the optics display subassembly 1802 from environmental elements and damage should the HMD device be dropped or bumped, impacted, etc. The optics display subassembly 1802 is mounted within the sealed visor in such a way that the shields do not contact the subassembly when deflected upon drop or impact.

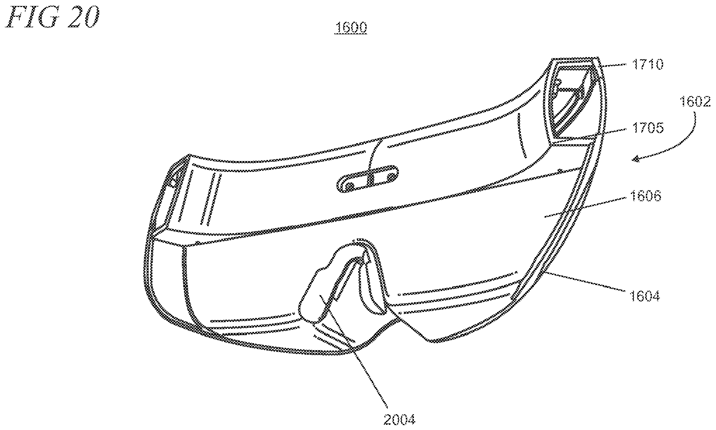

As shown in FIGs 18 and 20, the rear shield 1606 is configured in an ergonomically correct form to interface with the user's nose and nose pads 2004 (FIG 20) and other comfort features can be included (e.g., molded-in and/or added-on as discrete components). The sealed visor 1602 can also incorporate some level of optical diopter curvature (i.e., eye prescription) within the molded shields in some cases.

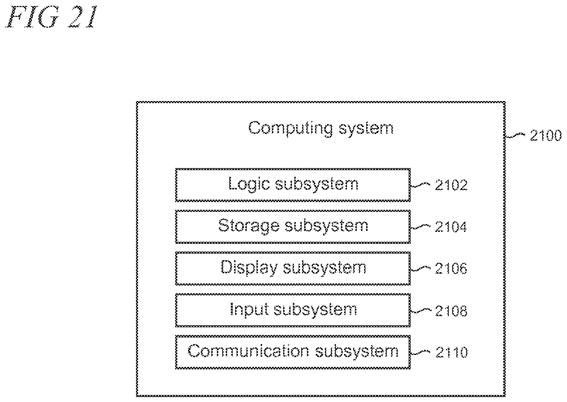

FIG 21 schematically shows a non-limiting embodiment of a computing system 2100 that can be used when implementing one or more of the configurations, arrangements, methods, or processes described above. The HMD device 104 may be one non-limiting example of computing system 2100. The computing system 2100 is shown in simplified form. It may be understood that virtually any computer architecture may be used without departing from the scope of the present arrangement. In different embodiments, computing system 2100 may take the form of a display device, wearable computing device, mainframe computer, server computer, desktop computer, laptop computer, tablet computer, home-entertainment computer, network computing device, gaming device, mobile computing device, mobile communication device (e.g., smart phone), etc.

The computing system 2100 includes a logic subsystem 2102 and a storage subsystem 2104. The computing system 2100 may optionally include a display subsystem 2106, an input subsystem 2108, a communication subsystem 2110, and/or other components not shown in FIG 21.

The logic subsystem 2102 includes one or more physical devices configured to execute instructions. For example, the logic subsystem 2102 may be configured to execute instructions that are part of one or more applications, services, programs, routines, libraries, objects, components, data structures, or other logical constructs. Such instructions may be implemented to perform a task, implement a data type, transform the state of one or more components, or otherwise arrive at a desired result.

The logic subsystem 2102 may include one or more processors configured to execute software instructions. Additionally or alternatively, the logic subsystem 2102 may include one or more hardware or firmware logic machines configured to execute hardware or firmware instructions. The processors of the logic subsystem 2102 may be single-core or multi-core, and the programs executed thereon may be configured for sequential, parallel, or distributed processing. The logic subsystem 2102 may optionally include individual components that are distributed among two or more devices, which can be remotely located and/or configured for coordinated processing. Aspects of the logic subsystem 2102 may be virtualized and executed by remotely accessible, networked computing devices configured in a cloud-computing configuration.

The storage subsystem 2104 includes one or more physical devices configured to hold data and/or instructions executable by the logic subsystem 2102 to implement the methods and processes described herein. When such methods and processes are implemented, the state of the storage subsystem 2104 may be transformed - for example, to hold different data.

The storage subsystem 2104 may include removable media and/or built-in devices. The storage subsystem 2104 may include optical memory devices (e.g., CD (compact disc), DVD (digital versatile disc), HD-DVD (high definition DVD), Blu-ray disc, etc.), semiconductor memory devices (e.g., RAM (random access memory), ROM (read only memory), EPROM (erasable programmable ROM), EEPROM (electrically erasable ROM), etc.) and/or magnetic memory devices (e.g., hard-disk drive, floppy-disk drive, tape drive, MRAM (magneto-resistive RAM), etc.), among others. The storage subsystem 2104 may include volatile, nonvolatile, dynamic, static, read/write, read-only, random-access, sequential-access, location-addressable, file-addressable, and/or content-addressable devices.

It may be appreciated that the storage subsystem 2104 includes one or more physical devices, and excludes propagating signals per se. However, in some implementations, aspects of the instructions described herein may be propagated by a pure signal (e.g., an electromagnetic signal, an optical signal, etc.) using a communications medium, as opposed to being stored on a storage device. Furthermore, data and/or other forms of information pertaining to the present arrangement may be propagated by a pure signal.

In some embodiments, aspects of the logic subsystem 2102 and of the storage subsystem 2104 may be integrated together into one or more hardware-logic components through which the functionality described herein may be enacted. Such hardware-logic components may include field-programmable gate arrays (FPGAs), program- and application-specific integrated circuits (PASIC / ASICs), program- and application-specific standard products (PSSP / ASSPs), system-on-α-chip (SOC) systems, and complex programmable logic devices (CPLDs), for example.

When included, the display subsystem 2106 may be used to present a visual representation of data held by storage subsystem 2104. This visual representation may take the form of a graphical user interface (GUI). As the present described methods and processes change the data held by the storage subsystem, and thus transform the state of the storage subsystem, the state of the display subsystem 2106 may likewise be transformed to visually represent changes in the underlying data. The display subsystem 2106 may include one or more display devices utilizing virtually any type of technology. Such display devices may be combined with logic subsystem 2102 and/or storage subsystem 2104 in a shared enclosure in some cases, or such display devices may be peripheral display devices in others.

When included, the input subsystem 2108 may include or interface with one or more user-input devices such as a keyboard, mouse, touch screen, or game controller. In some embodiments, the input subsystem may include or interface with selected natural user input (NUI) components. Such components may be integrated or peripheral, and the transduction and/or processing of input actions may be handled on- or off-board. Exemplary NUI components may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing components for assessing brain activity.

When included, the communication subsystem 2110 may be configured to communicatively couple the computing system 2100 with one or more other computing devices. The communication subsystem 2110 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 2100 to send and/or receive messages to and/or from other devices using a network such as the Internet.

Various exemplary embodiments of the present multi-user gaze projection are now presented by way of illustration and not as an exhaustive list of all embodiments. An example includes one or more computer readable memories storing computer-executable instructions which, when executed by one or more processors in a local head mounted display (HMD) device located in a physical environment, perform: using data from a sensor package incorporated into the HMD device to dynamically perform head tracking of the user within the physical environment; responsively to the head tracking, determining a field of view of a mixed reality or virtual reality environment that is renderable by the local HMD device, the field of view being variable depending at least in part on a pose of the user's head in the physical environment; receiving data from a remote HMD device including origin and intercept coordinates of a gaze ray that is projected from an origin at a view position of the remote HMD device and terminates at an intercept at a point of intersection between the projected ray and the mixed reality or virtual reality environment; and visibly rendering a gaze ray on the local HMD device using the received data within the field of view.

In another example, the one or more computer readable memories further include rendering a cursor within the field of view at the intercept coordinate. In another example, the one or more computer readable memories further include highlighting an object or an adjoining area that is coincident with the intercept coordinate, the highlighting including one of lighting effect, animation, or marker. In another example, the object is one of real object or virtual object. In another example, the one or more computer-readable memories further include rendering an avatar to represent a user of the remote HMD device, at least a portion of the avatar being coincident with the origin coordinate. In another example, the intercept coordinate is at an intersection between the projected gaze ray and a surface in the mixed reality or virtual reality environment that is closest to the local HMD device. In another example, the one or more computer-readable memories further include operatively coupling the local HMD device and the remote HMD device over a network. In another example, the one or more computer-readable memories further include receiving state data from the remote HMD device, the state data describing operations of the remote HMD device. In another example, the one or more computer-readable memories further include controlling an appearance of the visibly rendered gaze ray on the local HMD device based on user input. In another example, the one or more computer-readable memories further include visibly rendering multiple gaze rays in which each gaze ray is associated with an avatar of a different user of a respective one of a plurality of remote HMD devices. In another example, the one or more computer-readable memories further include visibly rendering the multiple gaze rays in which each ray is rendered in a manner to uniquely identify its associated user.

A further example includes a local head mounted display (HMD) device operable by a local user in a physical environment, comprising: one or more processors; a display for rendering a mixed reality or virtual reality environment to the user, a field of view of the mixed reality or virtual reality environment being variable depending at least in part on a pose of the user's head in the physical environment; a sensor package; and one or more memory devices storing computer-readable instructions which, when executed by the one or more processors, perform a method comprising the steps of: performing head tracking of the user within the physical environment using the sensor package, dynamically tracking an origin at the local user's view position of the mixed reality or virtual reality environment responsively to the head tracking, locating an intercept at an intersection between a ray projected from an origin at the view position and a point in the mixed reality or virtual reality environment within a current field of view, and sharing coordinates for the origin and intercept with a remote HMD device over a network, the remote HMD device being configured to visibly render a gaze ray using the coordinates to indicate to a remote user where the local user is looking in the mixed reality or virtual reality environment.

In another example, the HMD device further includes a user interface and operating the HMD device to enable or disable the sharing responsively to a user input to the UI. In another example, the HMD device further includes sharing new coordinates for the origin and intercept as the view position changes. In another example, the HMD device further includes tracking the local user's gaze direction and sharing new coordinates for the origin and intercept as the gaze direction changes.

Another example includes a method performed by a head mounted display (HMD) device that supports rendering of a mixed reality or virtual reality environment, comprising: obtaining sensor data describing a real world physical environment adjoining a user of the HMD device; tracking the user's head in the physical environment using the sensor data to determine a view position of the mixed reality or virtual reality environment; projecting a gaze ray outward at an origin at the view position; identifying an intersection between the projected gaze ray and the mixed reality or virtual reality environment; and transmitting the origin of the projected gaze ray and the identified intersection to a remote service or remote device.

In another example, the sensor data includes depth data and further including generating the sensor data using a depth sensor and applying surface reconstruction techniques to reconstruct the physical environment geometry. In another example, the method further includes generating depth data using depth-from-stereo imaging analyses. In another example, the method further includes exposing a user interface (UI) for receiving user input, the UI providing user controls or supporting gesture recognition or voice recognition. In another example, the method further includes projecting the gaze ray along a gaze direction of the user and using one or more inward facing sensors located in the HMD device to determine the gaze direction.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method (1100) performed by one or more processors in a local head mounted display, HMD, device located in a physical environment, the method comprising:
using data from a sensor package incorporated into the local HMD device to dynamically perform (1105) head tracking of a user within the physical environment;
responsively to the head tracking, determining (1110) a field of view of a mixed reality or virtual reality environment that is renderable by the local HMD device, the field of view being variable depending at least in part on a pose of the user's head in the physical environment;
**characterised in that** the method further comprises:
receiving (1115) data from a remote HMD device utilized by a remote user, the data including origin and intercept coordinates of a gaze ray (425) that is projected from an origin at a view position of the remote HMD device and terminates at an intercept at a point of intersection between the gaze ray and the mixed reality or virtual reality environment; and
visibly rendering (1120) the gaze ray on the local HMD device using the received data within the field of view, and rendering (1135) an avatar to represent the remote user, at least a portion of the avatar being coincident with the origin coordinate.

2. The method of claim 1 further including rendering (1125) a cursor within the field of view at the intercept coordinate.

3. The method of claim 1 further including highlighting (1130) an object or an adjoining area that is coincident with the intercept coordinate, the highlighting including one of lighting effect, animation, or marker.

4. The method of claim 3 in which the object is one of real object or virtual object.

5. The method of claim 1 in which the intercept coordinate is at an intersection between the projected gaze ray and a surface in the mixed reality or virtual reality environment that is closest to the remote HMD device.

6. The method of claim 1 further including operatively coupling the local HMD device and the remote HMD device over a network.

7. The method of claim 1 further including receiving state data from the remote HMD device, the state data describing operations of the remote HMD device.

8. The method of claim 1 further including controlling an appearance of the visibly rendered gaze ray on the local HMD device based on user input.

9. The method of claim 1 further including visibly rendering multiple gaze rays in which each gaze ray is associated with an avatar of a different user of a respective one of a plurality of remote HMD devices.

10. The method of claim 9 further including visibly rendering the multiple gaze rays in which each ray is rendered in a manner to uniquely identify its associated user.

11. A local head mounted display, HMD, device (104), operable by a local user (102) in a physical environment, comprising:
one or more processors;
a display for rendering a mixed reality or virtual reality environment to the user, a field of view of the mixed reality or virtual reality environment being variable depending at least in part on a pose of the user's head in the physical environment;
a sensor package (805); and
one or more memory devices storing computer-readable instructions which, when executed by the one or more processors, perform a method comprising the steps of:
using data from a sensor package incorporated into the local HMD device to dynamically perform (1105) head tracking of a user within the physical environment;
responsively to the head tracking, determining (1110) a field of view of a mixed reality or virtual reality environment that is renderable by the local HMD device, the field of view being variable depending at least in part on a pose of the user's head in the physical environment;
**characterised in that** the device further performs the steps of:
receiving (1115) data from a remote HMD device utilized by a remote user, the data including origin and intercept coordinates of a gaze ray (425) that is projected from an origin at a view position of the remote HMD device and terminates at an intercept at a point of intersection between the gaze ray and the mixed reality or virtual reality environment; and
visibly rendering (1120) the gaze ray on the local HMD device using the received data within the field of view, and rendering (1135) an avatar to represent the remote user, at least a portion of the avatar being coincident with the origin coordinate.

12. The HMD device of claim 11, wherein the method performed by the HMD further comprises:
performing (1205) head tracking of the user within the physical environment using the sensor package,
dynamically tracking (1210) an origin at the local user's view position of the mixed reality or virtual reality environment responsively to the head tracking,
locating (1215) an intercept at an intersection between a gaze ray (425) projected from an origin at the view position and a point in the mixed reality or virtual reality environment within a current field of view, and
sharing (1220) coordinates for the origin and intercept with a remote HMD device utilized by a remote user over a network.

13. The HMD device of claim 12 further including a user interface and operating the HMD device to enable or disable the sharing responsively to a user input to the UI.

14. The HMD device of claim 11 or claim 12 further including sharing new coordinates for the origin and intercept as the view position changes.

15. The HMD device of claim 11 or claim 12 further including tracking the local user's gaze direction and sharing new coordinates for the origin and intercept as the gaze direction changes.

## Patentansprüche

1. Verfahren (1100), das von einem oder mehreren Prozessoren in einer lokalen kopfmontierten Anzeige-, HMD, Vorrichtung durchgeführt wird, die sich in einer physischen Umgebung befindet, wobei das Verfahren umfasst:
Verwenden von Daten aus einem Sensorpaket, das in die lokale HMD-Vorrichtung integriert ist, um Kopfverfolgung eines Benutzers innerhalb der physischen Umgebung dynamisch durchzuführen (1105);
in Reaktion auf das Kopfverfolgen, Bestimmen (1110) eines Sichtfeldes einer gemischten Realitäts- oder virtuellen Realitätsumgebung, die von der lokalen HMD-Vorrichtung renderbar ist, wobei das Sichtfeld zumindest teilweise in Abhängigkeit von einer Pose des Kopfes des Benutzers in der physischen Umgebung variabel ist;
**dadurch gekennzeichnet, dass** das Verfahren weiter umfasst:
Empfangen (1115) von Daten von einer entfernter HMD-Vorrichtung, die von einem entfernten Benutzer genutzt wird, wobei die Daten Ursprungs- und Abfangkoordinaten eines Blickstrahls (425) beinhalten, der von einem Ursprung an einer Ansichtsposition der entfernten HMD-Vorrichtung projiziert wird und an einem Abfangpunkt an einem Schnittpunkt zwischen dem Blickstrahl und der gemischten Realitäts- oder virtuellen Realitätsumgebung endet; und
sichtbares Rendern (1120) des Blickstrahls auf der lokalen HMD-Vorrichtung unter Verwendung der empfangenen Daten innerhalb des Sichtfeldes, und Rendern (1135) eines Avatars zur Darstellung des entfernten Benutzers, wobei mindestens ein Abschnitt des Avatars mit der Ursprungskoordinate übereinstimmt.

2. Verfahren nach Anspruch 1, weiter Rendern (1125) eines Cursors innerhalb des Sichtfeldes an der Abfangkoordinate beinhaltend.

3. Verfahren nach Anspruch 1, weiter Markieren (1130) eines Objekts oder eines angrenzenden Bereichs beinhaltend, das bzw. der mit der Abfangkoordinate übereinstimmt, wobei das Markieren eines beinhaltet von einem Lichteffekt, einer Animation oder einer Markierung.

4. Verfahren nach Anspruch 3, in dem das Objekt eines ist von einem realen Objekt oder einem virtuellen Objekt.

5. Verfahren nach Anspruch 1, in dem die Abfangkoordinate sich an einem Schnittpunkt zwischen dem projizierten Blickstrahl und einer Fläche in der gemischten Realitäts- oder virtuellen Realitätsumgebung befindet, die sich am nähesten an der entfernten HMD-Vorrichtung befindet.

6. Verfahren nach Anspruch 1, weiter betriebsfähiges Koppeln der lokalen HMD-Vorrichtung und der entfernten HMD-Vorrichtung über ein Netzwerk beinhaltend.

7. Verfahren nach Anspruch 1, weiter Empfangen von Zustandsdaten von der entfernten HMD-Vorrichtung umfassend, wobei die Zustandsdaten Vorgänge der entfernten HMD-Vorrichtung beschreiben.

8. Verfahren nach Anspruch 1, weiter Steuern einer Erscheinung des sichtbar gerenderten Blickstrahls auf der lokalen HMD-Vorrichtung basierend auf Benutzereingabe beinhaltend.

9. Verfahren nach Anspruch 1, weiter sichtbares Rendern mehrerer Blickstrahlen beinhaltend, in dem jeder Blickstrahl einem Avatar eines unterschiedlichen Benutzers einer jeweiligen einen einer Vielzahl von entfernten HMD-Vorrichtungen zugeordnet ist.

10. Verfahren nach Anspruch 9, weiter sichtbares Rendern der mehreren Blickstrahlen beinhaltend, in dem jeder Strahl auf eine Weise gerendert wird, um seinen zugeordneten Benutzer eindeutig zu identifizieren.

11. Lokale kopfmontierte Anzeige-, HMD, Vorrichtung (104), die von einem lokalen Benutzer (102) in einer physischen Umgebung betrieben werden kann, umfassend:
einen oder mehrere Prozessoren;
eine Anzeige zum Rendern einer gemischten Realitäts- oder virtuellen Realitätsumgebung an den Benutzer, ein Sichtfeld der gemischten Realitäts- oder virtuellen Realitätsumgebung, das zumindest teilweise in Abhängigkeit von einer Pose des Kopfes des Benutzers in der physischen Umgebung variabel ist;
ein Sensorpaket (805); und
eine oder mehrere Speichervorrichtungen, die computerlesbare Anweisungen speichern, die, wenn sie von dem einen oder den mehreren Prozessoren ausgeführt werden, ein Verfahren durchführen, das die Schritte umfasst:
Verwenden von Daten aus einem Sensorpaket, das in die lokale HMD-Vorrichtung integriert ist, um Kopfverfolgung eines Benutzers innerhalb der physischen Umgebung dynamisch durchzuführen (1105);
in Reaktion auf das Kopfverfolgen, Bestimmen (1110) eines Sichtfeldes einer gemischten Realitäts- oder virtuellen Realitätsumgebung, die von der lokalen HMD-Vorrichtung renderbar ist, wobei das Sichtfeld zumindest teilweise in Abhängigkeit von einer Pose des Kopfes des Benutzers in der physischen Umgebung variabel ist;
**dadurch gekennzeichnet, dass** die Vorrichtung weiter die Schritte durchführt:
Empfangen (1115) von Daten von einer entfernten HMD-Vorrichtung, die von einem entfernten Benutzer genutzt wird, wobei die Daten Ursprungs- und Abfangkoordinaten eines Blickstrahls (425) beinhalten, der von einem Ursprung an einer Ansichtsposition der entfernten HMD-Vorrichtung projiziert wird und an einem Abfangpunkt an einem Schnittpunkt zwischen dem Blickstrahl und der gemischten Realitäts- oder virtuellen Realitätsumgebung endet; und
sichtbares Rendern (1120) des Blickstrahls auf der lokalen HMD-Vorrichtung unter Verwendung der empfangenen Daten innerhalb des Sichtfeldes, und Rendern (1135) eines Avatars zur Darstellung des entfernten Benutzers, wobei mindestens ein Abschnitt des Avatars mit der Ursprungskoordinate übereinstimmt.

12. HMD-Vorrichtung nach Anspruch 11, wobei das von der HMD durchgeführte Verfahren weiter umfasst:
Durchführen (1205) von Kopfverfolgen des Benutzers innerhalb der physischen Umgebung unter Verwendung des Sensorpakets,
dynamisches Verfolgen (1210) eines Ursprungs an der Ansichtsposition des lokalen Benutzers der gemischten Realitäts- oder virtuellen Realitätsumgebung in Reaktion auf das Kopfverfolgen,
Lokalisieren (1215) eines Abfangpunktes an einem Schnittpunkt zwischen einem Blickstrahl (425), der von einem Ursprung an der Ansichtsposition projiziert wird, und einem Punkt in der gemischten Realitäts- oder virtuellen Realitätsumgebung innerhalb eines aktuellen Sichtfeldes, und
Teilen (1220) von Koordinaten für den Ursprung und Abfangpunkt mit einer entfernten HMD-Vorrichtung, die von einem entfernten Benutzer über ein Netzwerk genutzt wird.

13. HMD-Vorrichtung nach Anspruch 12, weiter eine Benutzerschnittstelle beinhaltend und die HMD-Vorrichtung betreibend, um das Teilen in Reaktion auf eine Benutzereingabe in die Benutzerschnittstelle zu aktivieren oder zu deaktivieren.

14. HMD-Vorrichtung nach Anspruch 11 oder Anspruch 12, weiter Teilen neuer Koordinaten für den Ursprung und Abfangpunkt beinhaltend, wenn sich die Ansichtsposition ändert.

15. HMD-Vorrichtung nach Anspruch 11 oder Anspruch 12, weiter Verfolgen der Blickrichtung des lokalen Benutzers und Teilen neuer Koordinaten für den Ursprung und Abfangpunkt beinhaltend, wenn sich die Blickrichtung ändert.

## Revendications

1. Procédé (1100) effectué par un ou plusieurs processeurs dans un dispositif de visiocasque, HMD, local situé dans un environnement physique, le procédé comprenant :
l'utilisation de données provenant d'un boîtier capteur incorporé dans le dispositif HMD local pour effectuer dynamiquement (1105) le suivi de tête d'un utilisateur à l'intérieur de l'environnement physique ;
en réponse au suivi de tête, la détermination (1110) d'un champ de vision d'un environnement de réalité mixte ou de réalité virtuelle qui peut être rendu par le dispositif HMD local, le champ de vision étant variable en fonction au moins en partie d'une pose de la tête de l'utilisateur dans l'environnement physique ;
**caractérisé en ce que** le procédé comprend en outre :
la réception (1115) de donnée provenant d'un dispositif HMD distant utilisé par un utilisateur distant, incluant des coordonnées d'origine et d'interception d'un rayon de regard (425) qui est projeté à partir d'une origine au niveau d'une position de visualisation du dispositif HMD distant et se termine au niveau d'une interception au niveau d'un point d'intersection entre le rayon de regard et l'environnement de réalité mixte ou de réalité virtuelle ; et
le rendu visible (1120) du rayon de regard sur le dispositif HMD local au moyen des données reçues à l'intérieur du champ de vision, et le rendu (1135) d'un avatar pour représenter l'utilisateur distant, au moins une partie de l'avatar coïncidant avec la coordonnée d'origine.

2. Procédé selon la revendication 1, incluant en outre le rendu (1125) d'un curseur à l'intérieur du champ de vision au niveau de la coordonnée d'interception.

3. Procédé selon la revendication 1, incluant en outre la mise en évidence (1130) d'un objet ou d'une zone attenante qui coïncide avec la coordonnée d'interception, la mise en évidence incluant l'un d'un effet d'éclairage, d'une animation ou d'un marqueur.

4. Procédé selon la revendication 3, dans lequel l'objet est l'un d'un objet réel ou d'un objet virtuel.

5. Procédé selon la revendication 1, dans lequel la coordonnée d'interception est au niveau d'une intersection entre le rayon de regard projeté et une surface dans l'environnement de réalité mixte ou de réalité virtuelle qui est le plus proche du dispositif HMD distant.

6. Procédé selon la revendication 1, incluant en outre le couplage opérationnel du dispositif HMD local et du dispositif HMD distant sur un réseau.

7. Procédé selon la revendication 1, incluant en outre la réception de données d'état en provenance du dispositif HMD distant, les données d'état décrivant des opérations du dispositif HMD distant.

8. Procédé selon la revendication 1, incluant en outre le contrôle d'un aspect du rayon de regard rendu visiblement sur le dispositif HMD local sur la base d'une entrée d'utilisateur.

9. Procédé selon la revendication 1, incluant en outre le rendu visible de multiples rayons de regard dans lequel chaque rayon de regard est associé à un avatar d'un utilisateur différent de l'un respectif d'une pluralité de dispositifs HMD distants.

10. Procédé selon la revendication 9, incluant en outre le rendu visible des multiples rayons de regard dans lequel chaque rayon est rendu d'une manière à identifier de manière unique son utilisateur associé.

11. Dispositif de visiocasque HMD (104) local utilisable par un utilisateur local (102) dans un environnement physique, comprenant :
un ou plusieurs processeurs ;
un affichage pour assurer le rendu d'un environnement de réalité mixte ou de réalité virtuelle pour l'utilisateur, un champ de vision de l'environnement de réalité mixte ou de réalité virtuelle étant variable en fonction au moins en partie d'une pose de la tête de l'utilisateur dans l'environnement physique ;
un boîtier capteur (805) ; et
un ou plusieurs dispositifs de mémoire stockant des instructions lisibles par ordinateur qui, lorsqu'elles sont exécutées par les un ou plusieurs processeurs, effectuent un procédé comprenant les étapes de :
utilisation de données provenant d'un boîtier capteur incorporé dans le dispositif HMD local pour effectuer dynamiquement (1105) le suivi de tête d'un utilisateur à l'intérieur de l'environnement physique ;
en réponse au suivi de têtes, détermination (1110) d'un champ de vision d'un environnement de réalité mixte ou de réalité virtuelle qui peut être rendu par le dispositif HMD local, le champ de vision étant variable en fonction au moins en partie d'une pose de la tête de l'utilisateur dans l'environnement physique ;
**caractérisé en ce que** le dispositif effectue en outre les étapes de :
réception (1115) de données provenant d'un dispositif HMD distant utilisé par un utilisateur distant, les données incluant des coordonnées d'origine et d'interception d'un rayon de regard (425) qui est projeté à partir d'une origine au niveau d'une position de visualisation du dispositif HMD distant et se termine au niveau d'une interception au niveau d'un point d'intersection entre le rayon de regard et l'environnement de réalité mixte ou de réalité virtuelle ; et
rendu visible (1120) du rayon de regard sur le dispositif HMD local au moyen des données reçues à l'intérieur du champ de vision, et rendu (1135) d'un avatar pour représenter l'utilisateur distant, au moins une partie de l'avatar coïncidant avec la coordonnée d'origine.

12. Dispositif HMD selon la revendication 11, dans lequel le procédé effectué par le HMD comprend en outre :
la réalisation (1205) d'un suivi de tête de l'utilisateur à l'intérieur de l'environnement physique au moyen du boîtier capteur,
le suivi dynamique (1210) d'une origine au niveau d'une position de visualisation de l'utilisateur local de l'environnement de réalité mixte ou de réalité virtuelle en réponse au suivi de tête,
le positionnement (1215) d'une interception au niveau d'une intersection entre un rayon de regard (425) projeté à partir d'une origine au niveau de la position de visualisation et un point dans l'environnement de réalité mixte ou de réalité virtuelle à l'intérieur d'un champ de vision courant, et
le partage (1220) des coordonnées pour l'origine et l'interception avec un dispositif HMD distant utilisé par un utilisateur distant sur un réseau.

13. Dispositif HMD selon la revendication 12, incluant en outre une interface d'utilisateur assurant le fonctionnement du dispositif HMD pour activer ou désactiver le partage en réponse à une entrée d'utilisateur dans l'IU.

14. Dispositif HMD selon la revendication 11 ou la revendication 12, incluant en outre le partage de nouvelles coordonnées pour l'origine et l'interception lorsque la position de visualisation change.

15. Dispositif HMD selon la revendication 11 ou la revendication 12, incluant en outre le suivi de la direction du regard de l'utilisateur local et le partage de nouvelles coordonnées pour l'origine et l'interception lorsque la direction du regard change.
